Europäisches Patentamt

European Patent Office

Office européen des brevets

(19)

(11) Publication number: **0 076 113**
**B1**

(12) **EUROPEAN PATENT SPECIFICATION**

(45) Date of publication of patent specification: 02.12.87

(51) Int. Cl.⁴: **G 01 G 13/02,** G 01 G 3/12, G 01 G 13/16

(21) Application number: 82305045.5

(22) Date of filing: 24.09.82

(54) Weighing apparatus including an array of weighing machines.

(30) Priority: 24.09.81 JP 142237/81

(43) Date of publication of application:
06.04.83 Bulletin 83/14

(45) Publication of the grant of the patent:
02.12.87 Bulletin 87/49

(84) Designated Contracting States:
DE FR GB IT

(56) References cited:
FR-A-2 364 441
FR-A-2 454 091
GB-A-1 013 130
GB-A-2 070 362
GB-A-2 074 329
US-A-4 128 001

(73) Proprietor: KABUSHIKI KAISHA ISHIDA KOKI
SEISAKUSHO
44, Shogoin Sannou-cho Sakyo-ku
Kyoto-shi Kyoto 606 (JP)

(72) Inventor: Mikami, Yoshiharu
126-12, Shimogamo Miyazaki-cho Sakyo-ku
Kyoto-shi Kyoto (JP)

(74) Representative: Fane, Christopher Robin King
et al
HASELTINE LAKE & CO. Hazlitt House 28
Southampton Buildings Chancery Lane
London, WC2A 1AT (GB)

Courier Press, Leamington Spa, England.

**Description**

This invention relates to weighing apparatus including an array of weighing machines.

Of the forms of automatic weighing apparatus which are now available, some include a plurality of weighing machines rather than just a single weighing machine. One example is referred to as a combination computing type automatic weighing apparatus which weighs out articles by selecting a combination of the weighing machines that gives a total weight closest to a preset target weight, and then discharging the articles from respective weighing hoppers of the selected weighing machines, whereby the weight of the discharged articles will be close to the target weight. GB 2 070 362A shows such apparatus, in which the weighing machines are arrayed around a common supply location, from which articles to be weighed are conveyed to the weighing machines, each of the weighing machines including a load cell which would commonly be understood as having a resilient load-receiving beam coupled with a displacement sensor and mounted fixedly at one end whilst the other end of the beam is subject to the weight of a receptacle holding the articles being weighed by the machine concerned, so that flexing of the beam can cause the sensor to respond so as to provide an electrical measure of the weight of such articles.

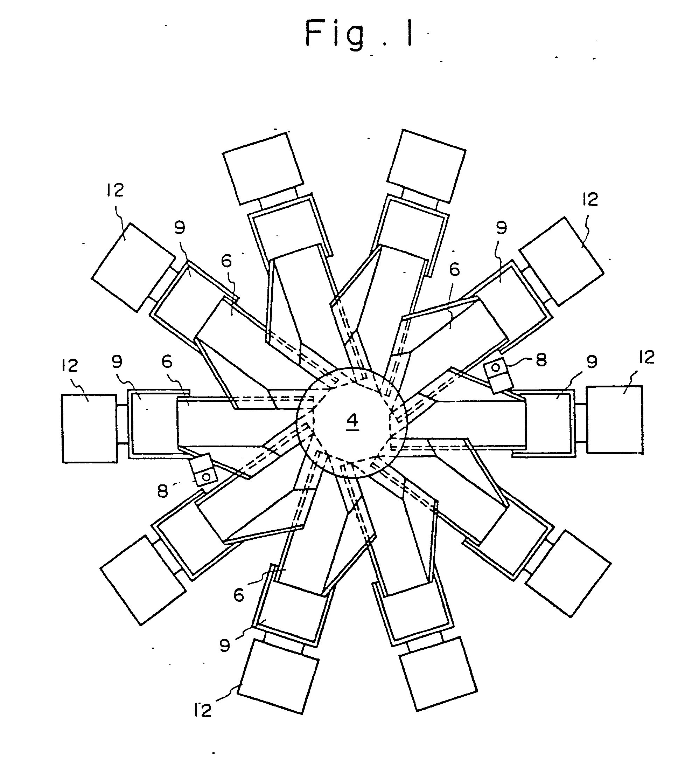

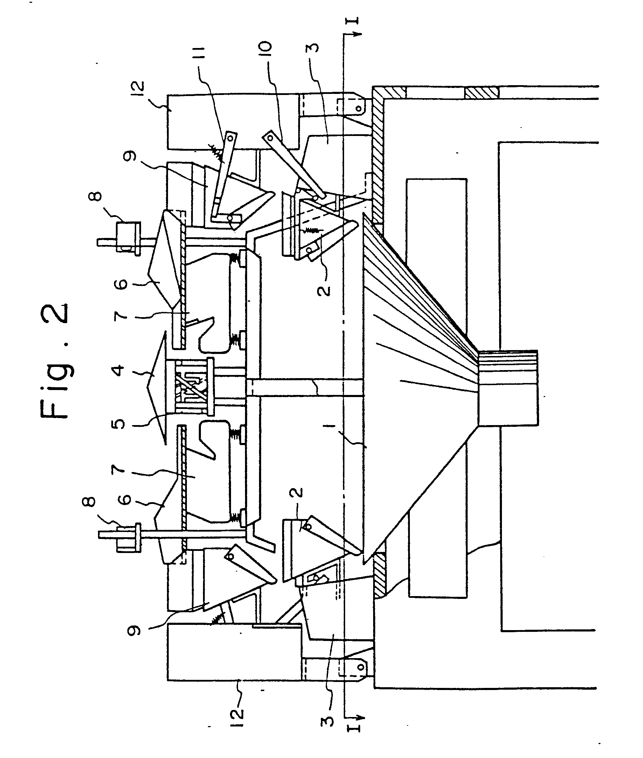

Figures 1 and 2 of the accompanying drawings show another example of such apparatus, as proposed by us before the present invention and subsequently published in GB 2 074 329A. Figure 1 is a top plan view illustrating this automatic weighing apparatus, and Figure 2 is a sectional side view of the same. In this automatic weighing apparatus, a plurality of weighing hoppers 2 are mounted in a circular array above the circumference of the top opening of a collecting chute 1. Each weighing hopper 2 is operatively associated with a weighing machine 3 designed to weigh articles contained in the weighing hopper 2. A distribution table 4 is supported on an electromagnetically operated vibrator 5 above supply troughs 6 and is set into helical reciprocating rotation. The supply troughs 6 are mounted so as to extend radially from the outer periphery of the distribution table 4 and are vibrated by corresponding electromagnetic vibrators 7. Sensors 8 are used for optically sensing the quantity of articles on the distribution table 4. A pool hopper 9 is provided between each weighing hopper 2 and the supply trough associated therewith. Each weighing hopper 2, with its associated pool hopper 9, is provided with a drive unit 12 and levers 10 and 11 for opening and closing the hoppers 2 and 9.

The computerized combinatorial weighing apparatus thus constructed operates as follows.

The articles are supplied from the distribution table 4 through supply troughs 6 into pool hoppers 9 and thence into weighing hoppers 2. The articles thus received in the weighing hoppers 2 are weighed by the weighing machines 3 associated therewith. Based on the weights measured by the weighing machines 3, a control unit, not shown, of the weighing apparatus performs a combinatorial weighing operation by comparing the result of each combinatorial adding operation performed on the article weights with a preset target weight and selecting the combination of articles, known as the best combination, that gives a total weight equal to the target weight or closest to the target weight. In this case, the number of articles in the combination may be arbitrary or predetermined, as desired. The control unit then operates to open the thus selected weighing hoppers 2 by the operation of the levers 10 and 11 so that the articles giving said best combination are released into the collecting chute 1 from the weighing hoppers 2 to be discharged towards a packaging machine or a bucket conveyor, not shown. This will leave the selected weighing hoppers 2 empty. Articles are then newly delivered from the corresponding pool hoppers 9 into said weighing hoppers 2, leaving these pool hoppers 9 empty, whereupon a new supply of articles is delivered from the distribution table 4 and the corresponding supply troughs 6. The weighing operation can be continued in this manner by repeating the foregoing steps.

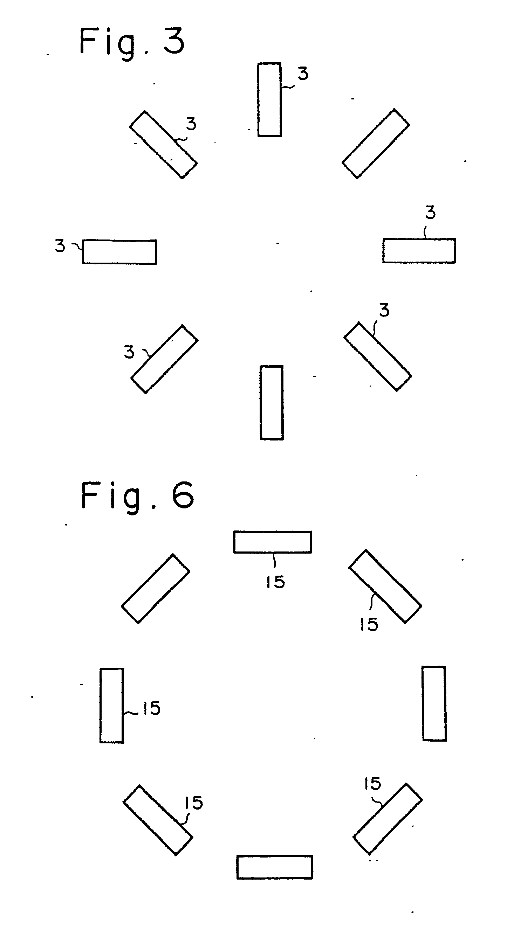

Each of the weighing machines 3 in a practical example of the above-described automatic weighing apparatus employs weighing means that rely upon compact, highly accurate load cells. Each load cell includes a strain gauge affixed to upper and lower beams of a rectangular frame, and is adapted to weigh articles by relying upon a variation in the resistance of the strain gauge caused by a load applied to a load receiving member. The weighing machines 3 are arrayed in radiating fashion so that, in accordance with the normal construction of conventional machines of this kind, the beams of the load cells lie along radial lines pointing to the center of the apparatus, as illustrated in the accompanying Figure 3 which is a simplified top view of the above-mentioned practical example of the apparatus of Figure 2, as it would appear if viewed along the line I—I with all but the weighing machine 3 removed. As a result, a great amount of space is required for the installation of the weighing machines, and both inspection and repair of the load cells are laborious tasks since the operator must perform the necessary work between adjacent weighing machines 3 where the available space is rather small.

Accordingly, it is desirable to provide such an automatic weighing apparatus wherein the load cells of the weighing machines within the apparatus can be inspected and repaired with greater facility from the outside of the apparatus.

According to the present invention there is provided weighing apparatus comprising a plurality of weighing machines arrayed around a common supply location from which articles to be weighed are conveyed to the weighing machines when the apparatus is in use, each of the said weighing machines including a load cell having a resilient load-receiving beam coupled with a displacement sensor and mounted fixedly at one end whilst the other end of the beam is subject to the weight of a receptacle for holding such articles being weighed by the machine, so that flexing of the beam can cause the said sensor to respond so as to provide an electrical measure of the weight of such articles; characterised in that each of the said weighing machines is so disposed that the longitudinal axis of its said load-receiving beam extends substantially perpendicularly to an imaginary line radiating from the common supply location to that beam.

Reference will now be made, by way of example, to the accompanying drawings, in which:

FIGURES 1 to 3 have been described above;

FIGURE 4 is a front view illustrating parts of a weighing machine for an embodiment of the present invention;

FIGURE 5 is a side elevation of the weighing machine of Figure 4; and

FIGURE 6 is a top view showing an arrangement of weighing machines in an automatic weighing apparatus embodying the present invention.

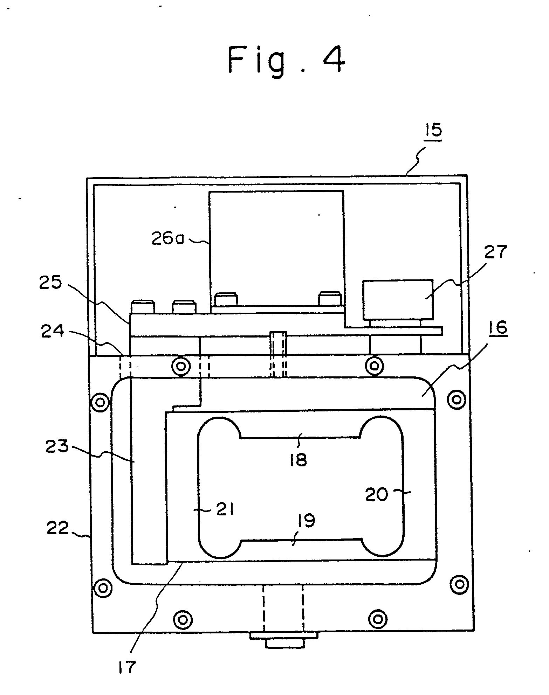

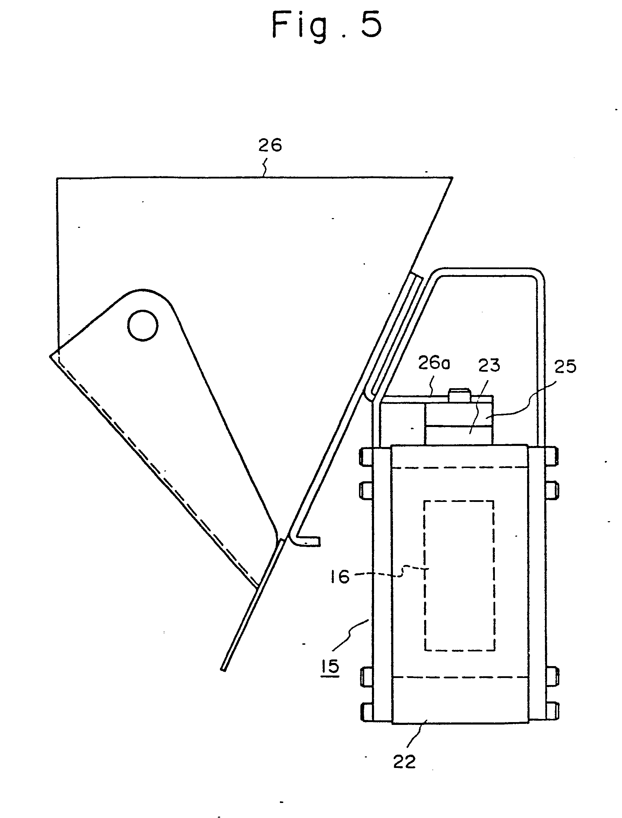

Reference will first be had to Figures 4 and 5 for a detailed description of automatic weighing apparatus constituting a preferred embodiment of the present invention.

A weighing machine 15 in the preferred embodiment includes a load cell 16 having a rectangularly shaped main body 17, which includes upper and lower beams 18 and 19, and a strain gauge (not shown) attached to the inner faces of the beams 18 and 19. The load cell body 17 also has a mounting base 20, joining the beams 18 and 19 at one end thereof, and a load receiving portion 21 joining the beams 18 and 19 at their other end. A rectangular support frame 22 is provided to accommodate and support the load cell body 17. Specifically, the load cell body 17 is disposed within the support frame 22 and has its mounting base 20 bolted or otherwise secured to the lateral side surface of the support frame 22. A support column 23 is affixed to the load receiving portion 21 of the load cell body 17 and has an upper end portion which projects through the upper side of the support frame 22 through a hole 24 formed in the support frame. A weighing hopper 26 (Figure 5) for holding articles supplied thereto for weighing has a mounting fitting 26a secured thereto for fixedly mounting the weighing hopper 26 on the upper end of the column 23 by means of a bracket 25 secured to that column. Numeral 27 denotes a weight for the span adjustment of the load cell 16.

The mounting fitting 26a projects from the bracket 25 in a direction at right angles to the longitudinal axes of the beams 18 and 19, so that these beams extend parallel to the rear (nearest) face of the weighing hopper 26. In the preferred embodiment a plurality of such machines are arranged in a circular array, with the respective rear faces of the weighing hoppers facing radially outward.

In the operation of the weighing machine 15, a load applied to the weighing hopper 26 by the weight of articles charged into the hopper is transmitted to the load receiving portion 21 of the load cell 16 through the fitting 26a, bracket 25 and support column 23. As the load is transmitted to the load receiving portion 21 and thence to the movable end of the beams 18 and 19, the strain gauge attached to the beams undergoes a change in resistance commensurate with the applied load, allowing the load, namely the weight of the articles, to be detected electrically.

The orientation of such weighing machines in the preferred embodiment of the invention is illustrated schematically in Figure 6. The weighing machines 15 are arrayed on a circle concentric with the center of the weighing apparatus, with the said upper and lower beams of the load cell of each machine extending parallel to a line drawn tangentially to the circle at the location of the machine concerned. Although not shown, an article supply mechanism, which may comprise the central distribution table, supply troughs and pool hoppers as illustrated in Figure 2, is provided above the weighing hoppers 26 supported on the weighing machines 15, and an article discharge apparatus, which may comprise a collecting chute and timing hopper, is provided below the weighing hoppers 26. Articles supplied to the weighing hoppers 26 are weighed by the weighing machines 15, combinations are computed based on the obtained weight values, the combination of weighing hoppers that gives a total weight equal to a preset target weight is selected, and the selected weighing hoppers are caused to discharge their articles.

Since each weighing machine 15 of this automatic weighing apparatus embodying the invention is so disposed that the longitudinal axes of the beams 18 and 19 of its load cell are substantially perpendicular to an imaginary line radiating from the center of the apparatus to the load cell concerned, the load cells incorporated within the weighing machines can be inspected and repaired, with relative ease, by a technician as he faces each weighing machine from the outside of the weighing apparatus. Thus the arrangement can facilitate inspection and repair and enhance operability. In addition, less installation space is required since the weighing machines do not project from the weighing apparatus along radial lines.

The present invention is not limited to use in a combination computing-type automatic apparatus for delivering a target weight of articles, but may also be applied to a combination computing-type automatic counting apparatus which, having a plurality of weighing machines, operates by dividing the weight of articles in each weighing machine by the average unit weight of each individual article to find the number of articles in the weighing hopper of each weighing machine, computing combinations of the numbers of articles, selecting the combination of weighing machines whose weighing hoppers will give a total number equal to a preset target number, and discharging the articles from the weighing hoppers of the selected weighing machines. Furthermore, the invention is not limited to such combination computing-type apparatus, but can be applied to other kinds of weighing apparatus employing a plurality of weighing machines which execute weighing independently of one another.

**Claims**

1. Weighing apparatus comprising a plurality of weighing machines (15) arrayed around a common supply location from which articles to be weighed are conveyed to the weighing machines when the apparatus is in use, each of the said weighing machines including a load cell (16) having a resilient load-receiving beam (18) coupled with a displacement sensor and mounted fixedly at one end whilst the other end of the beam is subject to the weight of a receptacle (26) for holding such articles being weighed by the machine (15), so that flexing of the beam (18) can cause the said sensor to respond so as to provide an electrical measure of the weight of such articles; characterised in that each of the said weighing machines (15) is so disposed that the longitudinal axis of its said load-receiving beam (18) extends substantially perpendicularly to an imaginary line radiating from the common supply location to that beam.

2. Apparatus as claimed in claim 1, wherein the said weighing machines (15) are arranged in a circular array so that the said beam (18) of each load cell is parallel to a line drawn tangentially to the circle at the location of the weighing machine concerned.

3. Apparatus as claimed in claim 1 or 2, wherein the load cell (16) of each of the said weighing machines has a rectangular main body (17) including mutually parallel upper and lower beams (18, 19), one of which is the beam of claim 1, and also including a mounting base (20) joining said upper and lower beams at one end thereof and a load receiving portion (21) joining said upper and lower beams at the other end thereof, the said displacement sensor being strain gauge means attached to the said upper and lower beams.

4. Apparatus as claimed in claim 3, wherein the said main body (17) of the load cell is accommodated within a support frame (22) to which the said mounting base (20) of the load cell is affixed.

5. Apparatus as claimed in claim 3 or 4, wherein there is affixed to the said load receiving portion (21) of the load cell a support column (23) for coupling a weighing hopper, constituting the said receptacle (26) of the machine (15), to the said load cell.

6. Apparatus as claimed in claim 5, wherein the said weighing hopper (26) has secured thereto a mounting fitting (26a) which is connected to a bracket (25) secured to the said support column (23).

7. Apparatus as claimed in any one of claims 1 to 5, wherein each of the respective receptacles (26) of the weighing machines (15) has a mounting fitting (26a) which is secured to the weighing machine concerned so as to extend at right angles to the said load-receiving beam (18) of that machine.

8. Apparatus as claimed in claim 6, wherein the said mounting fitting (26a) projects from the said bracket (25) in a direction at right angles to the said upper and lower beams (18, 19).

9. Apparatus as claimed in any preceding claim, wherein a supply mechanism, provided above the said weighing machines for conveying such articles thereto, includes pool hoppers, operatively associated respectively with weighing hoppers (26) constituting the said receptacles of the machines, for temporarily storing articles to be weighed, supply troughs operatively associated respectively with the said pool hoppers for supplying said pool hoppers with said articles to be weighed, and distribution table for distributing said articles among the said supply troughs.

10. Apparatus as claimed in any preceding claim, wherein a collecting chute is provided below the receptacles (26) of the weighing machines for collecting articles discharged therefrom.

**Patentansprüche**

1. Wägvorrichtung mit mehreren Wägmaschinen (15), die um eine gemeinsame Zuführstelle angeordnet sind, von der bei Betrieb der Vorrichtung zu wiegende Gegenstände zu den Wägmaschinen befördert werden, wobei jede der Wägmaschinen eine Kraftmeßdose (16) mit einem nachgiebigen kraftaufnehmenden Balken (18) aufweist, der mit einem Verschiebungssensor gekoppelt und an einem Ende fest montiert ist, während das andere Ende des Balkens das Gewicht eines Behälters (26) zum Halten dieser von der Maschine (15) gewogenen Gegenstände aufnimmt, so daß ein Biegen des Balkens (18) den Sensor dazu veranlaßt, als Antwort einen elektrischen Meßwert des Gewichtes dieser Gegenstände zu liefern; dadurch gekennzeichnet, daß jede der Wägmaschinen (15) so angeordnet ist, daß die Längsachse ihres kraftaufnehmenden Balkens (18) im wesentlichen rechtwinklig zu einer imaginären Linie verläuft, die sich radial von der gemeinsamen Zuführstelle zu diesem Balken erstreckt.

2. Vorrichtung nach Anspruch 1, bei der die Wägmaschinen (15) derart in einer kreisförmigen Reihe angeordnet sind, daß sich der Balken (18) jeder Kraftmeßdose parallel zu einer Linie erstreckt, die an der Position der betreffenden Wägmaschine tangential zu dem Kreis verläuft.

3. Vorrichtung nach Anspruch 1 oder 2, bei der die Kraftmeßdose (16) jeder der Wägmaschinen einen rechtwinkligen Hauptkörper (17) mit einem oberen und einem unteren Balken (18, 19) aufweist, die parallel zueinander sind und einer von denen der Balken nach Anspruch 1 ist, und ferner mit einer Montagebasis (20) zur Verbindung des oberen und des unteren Balkens an einem Ende der Balken und einem kraftaufnehmenden Teil (21) zur Verbindung des oberen und des unteren Balkens am anderen Ende der Balken versehen ist, wobei der Verschiebungssensor aus einem Zugspannungsmesser besteht, der am oberen und am unteren Balken befestigt ist.

4. Vorrichtung nach Anspruch 3, bei der der Hauptkörper (17) der Kraftmeßdose in einem Halterahmen (22) angeordnet ist, an dem die Montagebasis (20) der Kraftmeßdose befestigt ist.

5. Vorrichtung nach Anspruch 3 oder 4, bei der an dem kraftaufnehmenden Teil (21) der Kraftmeßdose eine Stützsäule (23) so befestigt ist, daß sie einen den Behälter (26) der Maschine (15) bildenden Wägbehälter mit der Kraftmeßdose verbindet.

6. Vorrichtung nach Anspruch 5, bei der am Wägbehälter (26) ein Befestigungsstück (26a) befestigt ist, das mit einem an der Stützsäule (23) befestigten Auflager (25) verbunden ist.

7. Vorrichtung nach einem der Ansprüche 1 bis 5, bei der jeder der betreffenden Behälter (26) der Wägmaschinen (15) ein Befestigungsstück (26a) aufweist, das derart an der zugehörigen Wägmaschine befestigt ist, daß es rechtwinklig zum kraftaufnehmenden Balken (18) dieser Maschine angeordnet ist.

8. Vorrichtung nach Anspruch 6, bei der das Befestigungsstück (26a) rechtwinklig zu dem oberen und dem unteren Balken (18, 19) über das Auflager (25) hinausragt.

9. Vorrichtung nach einem der vorhergehenden Ansprüche, bei der ein Zuführmechanismus, der zum Transportieren von Gegenständen zu den Wägmaschinen über der Wägmaschinen angeordnet ist, Sammelbehälter aufweist, die zum kurzzeitigen Aufnehmen zu wiegender Gegenstände jeweils arbeitsmäßig den die Behälter der Maschinen bildenden Wägbehältern (26) zugeordnet sind, Zuführrinnen, die jeweils arbeitsmäßig mit den Sammelbehältern verbunden sind, um den Sammelbehältern die zu wiegenden Gegenstände zuzuführen, und einen Verteilertisch zum Verteilen der Gegenstände auf die Zuführrinnen.

10. Vorrichtung nach einem der vorhergehenden Ansprüche, bei der unter den Behältern (26) der Wägmaschinen eine Sammelrutsche zum Sammeln von aus den Behältern ausgegebenen Gegenständen vorgesehen ist.

**Revendications**

1. Appareil de pesage comprenant une pluralité de machines de pesage (15) disposées autour d'un point commun d'alimentation à partir duquel les articles à peser sont transférés aux machines à peser quand l'appareil est en fonctionnement, chacune desdites machines à peser comportant une cellule de charge (16) ayant un fléau élastique (18) recevant la charge, couplé avec un capteur de déplacement et monté de façon fixe à une extrémité, tandis que l'autre extrémité du fléau est soumise au poids d'un réceptacle (26) pour supporter de tels articles pesés par la machine (15), de telle sorte que la flexion du fléau (18) peut amener ledit capteur à répondre de façon à fournir une mesure électrique du poids de tels articles, caractérisé par le fait que chacune desdites machines de pesage (15) est disposée de telle manière que l'axe longitudinal de son fléau (18) recevant la charge s'étend de façon essentiellement perpendiculaire à une ligne imaginaire joignant le point commun d'alimentation à ce fléau.

2. Appareil selon la revendication 1, dans lequel lesdites machines de pesage (15) sont arrangées en une disposition circulaire, de telle sorte que ledit fléau (18) de chaque cellule de charge est parallèle à une ligne tracée tangentiellement au cercle à l'emplacement de la machine de pesage concernée.

3. Appareil selon les revendications 1 ou 2, dans lequel la cellule de charge (16) de chacune desdites machines de pesage a un corps principal rectangulaire (17) comportant des fléaux supérieur et inférieur mutuellement parallèles (18, 19), l'un d'entre eux étant le fléau de la revendication 1, et comportant également une base de montage (20) joignant lesdits fléaux supérieur et inférieur à une de leurs extrémités, et une partie (21) de réception de charge joignant lesdits fléaux supérieur et inférieur à leur autre extrémité, ledit capteur de déplacement étant une jauge de contrainte fixée auxdits fléaux supérieur et inférieur.

4. Appareil selon la revendication 3, dans lequel ledit corps principal (17) de la cellule de charge est logé à l'intérieur d'un cadre support (22) sur lequel est fixée ladite base de montage (20) de la cellule de charge.

5. Appareil selon les revendications 3 ou 4, dans lequel une colonne support (23) est fixée à ladite partie de réception de charge de la cellule de charge, pour raccorder une trémie peseuse, constituant ledit réceptacle (26) de la machine (15), avec ladite cellule de charge.

6. Appareil selon la revendication 5, dans lequel ladite trémie peseuse (26) a une pièce de montage (26a) fixé sur elle et relié à un support (25) fixé sur ladite colonne support (23).

7. Appareil selon l'une quelconque des revendications 1 à 5, dans lequel chacun des réceptacles respectifs (26) des machines de pesage (15) a une pièce de montage (26a) qui est fixé à la machine de pesage concernée de manière à s'étendre à angle droit par rapport audit fléau (18) de réception de charge de cette machine.

8. Appareil selon la revendication 6, dans lequel ladite pièce de montage (26a) s'étend depuis ledit support (25) dans une direction à angle droit par rapport auxdits fléaux supérieur et inférieur (18, 19).

9. Appareil selon l'une quelconque des revendications précédentes dans lequel un mécanisme d'alimentation, prévu au-dessus desdites machines de pesage pour transporter en cet endroit de tels articles, comprend un groupe de trémies, associées fonctionnellement respectivement avec les trémies peseuses (26) constituant lesdits réceptacles des machines, pour stocker temporairement les articles à peser, des auges d'alimentation associées fonctionnellement respectivement avec ledit groupe de trémies pour alimenter ledit groupe de trémies avec lesdits articles à peser, et un table de distribution pour distribuer lesdits articles auxdites auges d'alimentation.

10. Appareil selon l'une quelconque des revendications précédentes, dans lequel une goulotte collectrice est prévue en-dessous des réceptacles (26) des machines de pesage pour collecter les articles déchargées de ces machines.

# Fig. 1

# Fig . 2

# Fig. 3

3

3

3

3

3

3

# Fig. 6

15

15

15

15

15

15

# Fig. 4

# Fig. 5